(19) Europäisches Patentamt
European Patent Office
Office européen des brevets

(11) **EP 4 733 604 A1**

(12) **EUROPEAN PATENT APPLICATION**

(43) Date of publication:
**29.04.2026 Bulletin 2026/18**

(21) Application number: **25460044.8**

(22) Date of filing: **30.09.2025**

(51) International Patent Classification (IPC):
**F15D 1/12** $^{(2006.01)}$

(52) Cooperative Patent Classification (CPC):
**F15D 1/0045; B61D 17/02; B63B 1/36;
B64C 21/10; F03D 1/0649; F15D 1/12;**
B64C 2230/26; F05B 2230/90; F05B 2250/61

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 PL 44992224**

(71) Applicant: **Politechnika Czestochowska
42-200 Czestochowa (PL)**

(72) Inventor: **The designation of the inventor has not
yet been filed**

(54) **CORRUGATED COATING AND METHOD FOR SELECTING THE COATING PARAMETERS**

(57) The invention concerns a thin, corrugated skin coating for controlling the turbulent boundary layer developing on a surface of an aerodynamic body, particularly in areas characterised by a high risk of flow separation, which coating enables effective reduction or complete elimination of turbulent separation at high Reynolds numbers. The invention concerns a thin skin coating that comprises an active section consisting of a corrugated surface that modulates the turbulent boundary layer, and an adhesive section that enables installation of the coating on a physical body providing resistance when there is relative motion between the body and a viscous fluid. Examples of such objects include wind turbine blades.

A method for selecting parameters of the coating, **characterised in that** it comprises the following steps: determining the local Reynolds number **Re_τ,** identifying the starting point for installation of the corrugated coating, selecting the coating corrugation amplitude so that it rises above the surface by 3% to 4% of the boundary layer thickness. selecting the corrugation wavelength of 15 x the amplitude, taking into account local flow conditions such as a deviation of the flow direction, caused, e.g., by a centrifugal force resulting from the rotational motion of a blade or from the shape of the body surface of a moving vehicle.

The surface skin coating for turbulent flow control, whose parameters are determined according to the method described in claims 1-2, **is characterised in that** its thickness ranges from 0.1 mm to 15 mm, it has on one side a corrugated, in at least one direction, technically smooth surface, and the amplitude is 5% to 6% of the thickness of the turbulent boundary layer developing at the location where the coating is installed.

**Fig. 1**

EP 4 733 604 A1

**Description**

**FIELD OF THE INVENTION**

This invention concerns a corrugated coating integrally bonded to a surface of a streamlined body, intended for controlling the turbulent boundary layer developing on the surface of the body, in particular for regions characterised by a high risk of flow separation. The coating is intended to modify local flow parameters within the boundary layer, which enables effective reduction or complete elimination of turbulent flow separation at high Reynolds numbers.

The described coating features a thin-layered structure and an active functional element which includes a corrugated working surface that promotes momentum transport toward the surface within the turbulent boundary layer developing along that aerodynamic surface. The geometry of that surface is designed to enable the displacement of the fluid stream separation point, which results in improved flow characteristics of streamlined aerodynamic systems in operation. Therefore, the corrugated coating is part of the skin, e.g. of wind turbine blades, of the solid body being flowed over around which fluid motion occurs. The field of application of the invention includes aerodynamic bodies such as wind turbine blades, components of airborne and marine water vehicles, as well as other systems that require drag reduction. The geometry of the coating may be adapted to operational parameters by modifying the scale and shape of the corrugation.

**PRIOR ART**

Based on research, it is known that a body on which a non-laminar boundary layer exists generates a high level of fluid flow drag. In particular, the presence of a fully developed turbulence in the boundary layer causes increased surface friction and the formation of vortical structures that adversely affect flow stability. In the event of turbulent flow separation from the surface of a body, the aerodynamic or hydrodynamic performance characteristics deteriorate further - a clear reduction in lift force (in the case of lifting elements) and an increase in total drag, leading to a decrease in the efficiency of technical systems, are observed.

Experimental and numerical studies have clearly demonstrated that the development of a turbulent boundary layer on the surface of a body moving relative to a viscous fluid leads to a significant increase in flow resistance. In particular, turbulent flow separation causes deterioration in aerodynamic performance characteristics by reducing lift and increasing total flow resistance.

In cases involving relative motion between a physical body and the surrounding fluid, as in the case of aircraft, wind turbine blades, marine and underwater vehicles, turbulent flow is undesirable. In commercial applications, efforts are made to maintain laminar flow on the components of flow machinery for as long as possible by using various flow control methods in order to reduce drag. In particular, the use of surface control structures, such as the corrugated skin coating described in the present application, enables intentional shaping of boundary layer development and preventing its separation. The method is based on the mechanism of increasing the propagation velocity of small-scale turbulence structures induced by the interscale modulation effect [6]. The interscale modulation process between large-scale and small-scale turbulence structures enhances momentum transport from the outer to the inner part of the boundary layer, which contributes to an increase in shear stress at the wall [7]. In this process, large-scale turbulent structures, indirectly through their activity (by modulating the small-scale turbulence), affect the value of shear stress, in particular at medium and high Reynolds numbers, as demonstrated by Agostini and Leschziner [5]. These stresses are the main reason of increased aerodynamic drag, but only in the case of streamlined bodies. By reinforcing that mechanism through introducing a stationary, long-wavelength surface corrugation, a new passive method has been developed for controlling turbulent separation that occurs on aerodynamic surfaces. A suitably corrugated surface induces an increase in the energy of small-scale structures in high-velocity regions (at crests) and a decrease in energy in low-velocity regions (at troughs). Generally, provided that no separation occurs within the troughs of the corrugation, the stronger vortical structures generated at the crests move faster, directly enhancing the event of entraining fluid elements toward the wall. This process is described in detail in publication [7].

In that paper [7], the efficiency of this mechanism was demonstrated experimentally. The research focused on analysing the influence of different amplitudes, wavelengths and lengths of surface corrugation on the value of wall shear stress downstream of the corrugation. The tested cases of corrugated surfaces had a constant wave amplitude in viscous units. The analysis enabled the determination of an effective corrugated wall surface that was close to optimal for the analysed flow at a high Reynolds number. This resulted in an increase in the friction drag coefficient of approximately 50% compared to an identical smooth surface without corrugation. This also led to an increase in momentum in the entire boundary layer, not just near the wall. These findings are important, since such an increase in momentum, resulting in a substantial delay of separation, has not previously been achieved for any passive method at high Reynolds numbers ($Re_c > 10^6$). That discovery has a significant impact on the efficiency of converting flow energy into mechanical energy in various engineering and technological applications. An increase in shear stress on body surfaces where turbulent separation occurs translates into improved aerodynamic efficiency, e.g. an increased ratio of lift coefficient to drag coefficient.

Wind turbines are an example of such an application. Large turbines currently in use offshore, despite being fitted with laminar aerodynamic blade profiles, show a considerable share of turbulent flow. In addition, erosion or contamination of turbine blades by saltwater increases that share, causing a rise in the local Reynolds number based on shear stress $Re_\tau$ = $\delta^+$ = $\rho u_\tau \delta / \mu$, where $u_\tau = \sqrt{\tau_w / \rho}$ is the friction velocity, $\rho$ is the fluid (air) density, $\tau_w$ is the wall shear stress, $\mu$ is the dynamic viscosity, $\delta$ is the boundary layer thickness [5], and the superscript + denotes viscous scaling ( $\frac{\rho u_\tau}{\mu}$ ).

Vortex generators, which are applied for smaller structures, are no longer efficient for the largest wind turbines currently installed. In cases of non-optimal inflow to the profile or curvature of the surface, flow separation (either laminar or turbulent) occurs in the form of a bubble or open separation. This results in a significant increase in pressure drag, which is often much greater than the potential reduction in friction drag caused by flow turbulence. Consequently, the overall drag coefficient increases, which for an aerofoil is additionally accompanied by a decrease in lift force.

From European patent specification EP1283163B1, a solution is known that involves the use of a small-scale configuration of ribs distributed on the surface of a body being flowed over, designed to reduce surface friction drag, e.g. on an aircraft surface. Unlike in the proposed method, which increases friction drag, that solution aims to reduce friction drag by stabilising/laminarising the flow. The rib contours are arranged perpendicular to flow direction, and the rib cross-sections may take various forms, such as serrated, convex, concave, or alternately convex and concave.

From U.S. patent specification US6345791B1, a solution is known comprising a series of parallel ribs that extend along a smooth aerodynamic surface to reduce surface friction drag. The ribs, having a triangular cross-section, form a continuous, corrugated ridge with crests and troughs. Measured from the surface, the crests have a greater height than the troughs. Interaction of the ribs with the turbulent flow results in a reduction of the surface friction drag coefficient by approximately 12% compared to a smooth surface, despite an increase in the total area of the body being flowed over.

From U.S. patent application US5833389A, an apparatus for controlling turbulence in the boundary layer is known. In natural conditions, that layer features a system of pairs of vortices or streaks adjacent to the surface and extending in the flow direction. The apparatus operates by locally introducing disturbances through passive means that amplify or damp the vortex pairs, thereby locally increasing or decreasing turbulence in the flow.

Generators of vortices having a height around y+=15 are also known, which induce the formation of longitudinal vortical structures capable of producing a similar mechanism of small vortical structure modulation. However, the efficiency of such generators introduces considerable pressure drag, as they have sharp edges (a type of k-roughness), where micro-separation of the layer occurs, generating a high drag. From the literature it is known that surface roughness brings beneficial aerodynamic effects only at low Re numbers (it induces laminar-to-turbulent transition).

The literature also mentions passive solutions such as longitudinal ribs or transverse rods mounted above the wall-Large Eddy Break-Up (LEBU) device, which modify turbulence at the boundary layer and are designed to stabilise the flow (laminarisation or breaking up of large structures), which reduces shear stress and thus also friction drag. The beneficial effect of such solutions is, however, limited to attached flows, without separation.

The proposed solution may be applied, e.g., at the profile of a wind turbine blade operating in off-design conditions due to large torsional deformations of the blade. Under such conditions, periodic large-scale flow separation occurs. The objective of the solution is to enhance flow turbulence, which increases shear stress like in vortex generators at low Re numbers. The increased flow turbulence stimulation delays the separation point and reduces the size of the separation bubble, thereby contributing to a reduction in pressure drag. A beneficial effect of the proposed solution is thus the reduction of total drag, which is impossible with the competing solutions described above. Of course, it should be noted that the corrugation itself slightly increases the profile's friction drag, but proper adjustment of its geometry (amplitude and wavelength of the corrugation) reduces the aerodynamic wake, thereby lowering the total drag.

Thus, existing solutions applied for laminar flow, i.e. various types of vortex generators, have limited applicability to turbulent layers.

The conducted comparison indicates that there is currently no known solution that acts in this manner at high Reynolds numbers.

An additional novel feature disclosed in the present solution, compared to the studies known from literature, lies in the modification of the wave by its inclination; the direction of that inclination is defined by increasing the slope of the leading edge by up to 30% relative to the trailing edge, in accordance with the flow direction, which yields an additional several tens of percent increase in stress and further delays flow separation.

Therefore, it is needed to develop a passive turbulence control system that does not require additional supply channels, is not burdened by excessive weight, which continues to be a challenge for boundary-layer flow control mechanisms, and offers competitive economic benefits and ease of implementation.

The existing passive solutions used for high Reynolds numbers do not cause a delay in turbulent flow separation on surfaces with a high risk of flow separation, which is crucial for reducing drag.

**DISCLOSURE OF THE INVENTION**

The technical problem addressed by the present invention is the delay of turbulent flow separation on surfaces with a high risk of flow separation in order to reduce total drag, which effect is achieved by means of a corrugated skin coating mounted on the surface of a body being flowed over, e.g. on the profile of a wind turbine blade already in operation, or by means of a corrugated coating formed in the outer skin during production. Mounting the corrugated surface coating does not require any significant interference in the structure of the device or means of transport, and due to its negligible thickness (typically a few millimetres), it can be installed on components of devices already in operation. In contrast, a formed layer of the skin requires interference in the outer skin of the structure to achieve a 50% increase in efficiency compared to the skin layer applied externally on the structure.

Another technical problem addressed by this patent disclosure is a method for selecting coating parameters for flow control. This results in such a design of the coating corrugation geometry to achieve optimum delay of separation of the turbulent boundary layer developing on the surface.

In view of the prior art described above, the objective of the present invention is to overcome the identified disadvantages and to provide a solution in the form of a corrugated surface coating for passive control of turbulent flow separation, and a method for selecting the parameters of such a corrugated skin coating, properly selected for the existing flow, [*which*] reduces drag on surfaces with a high risk of flow separation, such as aircraft wings, aircraft fuselages, high-speed train bodies, wind turbine blades, or aft surfaces of marine vessel hulls.

The method for selecting the parameters of corrugated coating is **characterised in that** it comprises the following steps:

> **a.** measuring the mean velocity profile halfway between the point where the static pressure gradient on the surface changes and the point of complete separation of the turbulent boundary layer;
>
> **b.** determining the local friction velocity $u\_\tau = \sqrt{\tau_w/\rho}$ , where $\tau_w = \mu \dfrac{dU}{dn}$ , $\mu$ is the dynamic viscosity of the fluid, $\dfrac{dU}{dn}$ is the velocity gradient in the direction normal to the surface, and $\rho$ is the fluid density;
>
> **c.** determining the local boundary layer thickness $\delta$ based on the boundary layer measured in point **a;**
>
> **d.** determining the local Reynolds number $Re\_\tau = \delta^+ = \rho u_\tau \delta/\mu$ and confirming that $Re\_\tau$ is higher than 2000, which is a condition necessary to effectively use the corrugated coating;
>
> **e.** identifying the starting point for installation of the coating at the point where the static pressure gradient on the surface changes;
>
> **f.** selecting the coating corrugation amplitude, which should rise above the surface by 4% to 6% or 3% to 4% of the thickness of turbulent boundary layer of the fluid, measured in point c for the coating applied on the surface or for the layer formed in the outer skin, respectively;
>
> **g.** selecting the corrugation wavelength, which, along the coating, maintains a constant ratio to amplitude, which ratio is 15, wherein the ratio is calculated along the mean streamline after taking into account, e.g., the deviation of the streamline from the corrugation direction;
>
> **h.** selecting the end point of the coating so that a full wavelength ends as close as possible to the location where the velocity profile was measured in point **a;**
>
> **i.** evaluating the effectiveness of corrugation under nominal and varying flow conditions (e.g. by checking the aerodynamic characteristics of the surface being flowed over).

Preferably, the coating is permanently attached to the substrate of the aerodynamic element.

The coating for turbulent flow control, whose parameters are determined according to the method described above, **is characterised in that** its thickness ranges from 0.1 mm to 15 mm, it has on one side a corrugated, in at least one direction, technically smooth surface, and the amplitude is up to 6% of the thickness of the turbulent boundary layer developing at the location where the coating is installed.

Preferably, the wave is inclined, wherein the leading edge is up to 35% steeper than the trailing edge, and the amplitude-to-wavelength ratio of the corrugation ranges from 0.015 to 0.15, taking into account that the ratio is determined along the flow direction and wave inclination.

Preferably, the first and last amplitudes of the surface coating wave have values of 3% and 4%, respectively, of the thickness of the turbulent boundary layer of the fluid, measured in point c.

Preferably, the strength of the coating is comparable to the outer layer of wind turbine blade profiles, and it may be made of an elastic material and attached or formed by any method.

Preferably, the surface coating has an adhesive surface that allows attachment to another surface (e.g. by gluing).

An undeniable advantage of the corrugated overlay/formed layer on a wall being flowed over by a turbulent flow, is that it increases momentum within the turbulent boundary layer and reduces drag by decreasing the turbulent wake, which results in an increase in the efficiency of flow devices by 3% to 20%, depending on the Reynolds number.

The proposed passive method of controlling turbulent flow separation, in the version of a surface-applied skin layer with a corrugated plane, is distinguished from other flow control methods by the fact that it may be installed on flow devices already in operation, thereby reducing the costs of geometric modification (for example, the layer may be mounted during repair of wind turbine blade surfaces).

The skin layer with an adequately corrugated surface has the form of a wave inclined upstream, wherein the leading slope is up to around 30% steeper than the trailing slope, which allows for increasing the efficiency up to 20% compared to a non-inclined wave. The amplitude and wavelength of the corrugation increase along the flow direction, in proportion to the growing boundary layer thickness.

Therefore, there is a need for an invention that reduces aerodynamic drag across a broader range of operating conditions, in particular at high Reynolds numbers, while simultaneously improving structural strength compared to competing products (active control methods).

## BRIEF DESCRIPTION OF THE FIGURES

To better understand the invention, it has been illustrated in embodiments and in the attached figures, in which:

**Fig. 1** shows a view of a wind turbine blade with the overlay indicated;

**Fig. 2** shows a cross-section of a wind turbine blade profile with an applied coating **a** / a formed layer **b**;

**Fig. 3** shows a view of a train body with the indicated overlay;

**Fig. 4** shows a cross-section of a train body with the overlay.

The coating shown in the attached figures is illustrative only, and the final shape and distribution on the object will depend on specific application.

## MODES FOR IMPLEMENTING THE INVENTION

The following examples illustrate the invention without limiting it in any way.

### Example 1. METHOD FOR SELECTING COATING PARAMETERS

The selection of parameters for the surface coating with a corrugated surface involves a sequence of steps that allow for optimal adjustment of its geometric properties to local flow conditions:

a. The velocity profile within the boundary layer is measured in the region located halfway between the point of change in the sign of static pressure gradient on the surface and the point of complete flow separation. The measurement may be carried out either experimentally (e.g. by constant temperature anemometry CTA, laser anemometry, PIV) or by means of computational fluid dynamics (CFD) simulation.

b. Based on the velocity profile, the local friction velocity $\mathbf{u\_\tau} = \sqrt{\tau_w/\rho}$ is determined, where $\tau_w = \mu \dfrac{dU}{dn}$ , $\mu$ is the dynamic viscosity of the fluid, $\dfrac{dU}{dn}$ is the velocity gradient in the direction normal to the surface, and $\rho$ is the fluid density.

c. In addition, the boundary layer thickness $\delta$ is determined based on the boundary layer measured in point **a.**

d. The local friction Reynolds number is determined based on friction velocity $Re\_\tau = \rho u_\tau \delta/\mu$, and it is verified whether it is higher than the threshold of 2000, which is a condition necessary for the effective operation of the coating.

e. The starting point for installation of the coating is established, which corresponds to the location where the static pressure gradient changes sign from negative to positive.

f. The amplitude of the coating corrugation is selected in such a way that, along the length of the surface being flowed over, it rises streamwise by 4% to 6% or 3% to 4% of the turbulent boundary layer thickness determined in point **c** for a corrugated coating as an overlay or a coating formed in the outer skin, respectively. This variation enables progressive enhancement of the momentum modification effect within the boundary layer and increases the effectiveness of flow control in the region preceding the separation.

g. The wavelength of the corrugation is selected in such a way that, along the coating, it maintains a constant ratio to the amplitude, which ratio is 15, wherein that ratio is calculated along the mean streamline and the factors to be taken into account should include, e.g., a deviation of the streamline from the corrugation direction, which may be caused, e.g., by a centrifugal force caused by the rotational motion of a blade or by the shape of the body surface of a moving vehicle.

h. The end point of the coating is determined near the location of the velocity profile measurement defined in point **a;**

i. An evaluation of corrugation effectiveness is then performed, taking into account both nominal flow conditions (typical of the designed operation of the body being flowed over) and variable inflow conditions. A corrugation pattern suited to nominal flow conditions is most effective in modulating small-scale turbulence developing within the boundary layer (e.g. by checking the aerodynamic performance characteristics of the surface being flowed over).

## Example 2. SURFACE COATING FOR CONTROLLING SEPARATION OF A TURBULENT BOUNDARY LAYER ON A HIGH-POWER WIND TURBINE BLADE

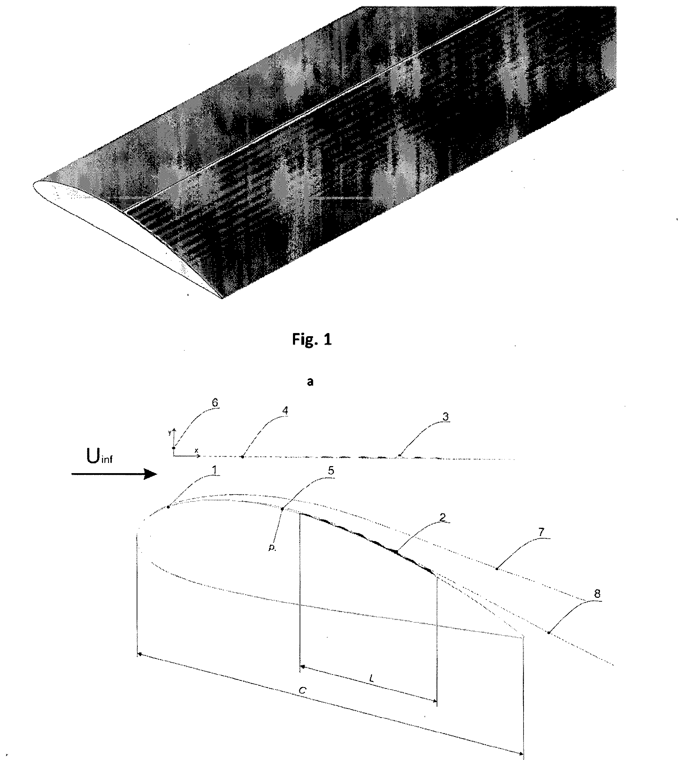

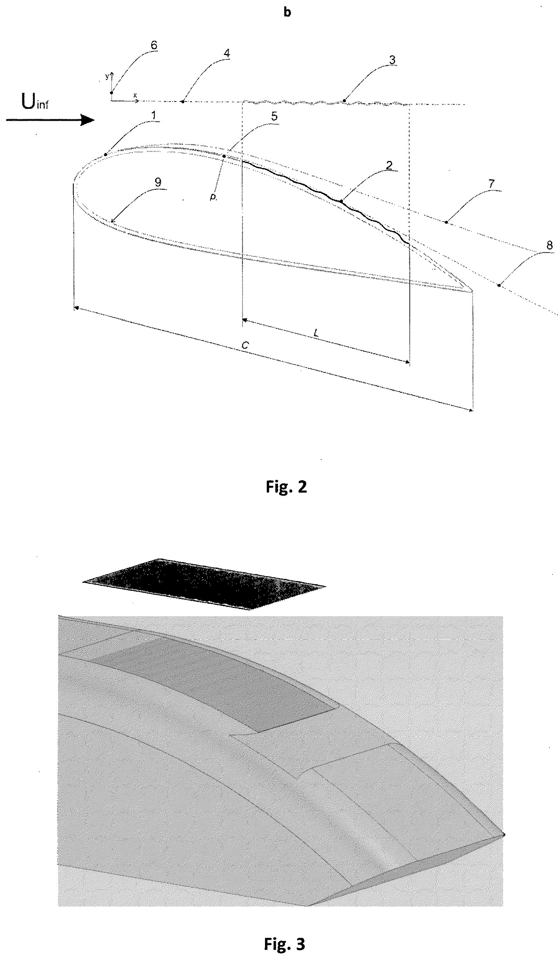

**Fig. 1** shows a general view of a preferred embodiment of the invention, applied at the profile of a wind turbine blade. The coating parameters have been determined according to the method described in **Example 1**. **Fig. 2a** shows the invention as a corrugated surface coating of a profile **2** mounted on the unmodified suction part of the blade **1,** downstream of point 5. In this example, the surface coating with a corrugated wall **2** covers approximately 35% of the profile's chord **c** = about 2.5 m on average, and does not exceed a thickness of 0.0014c, which in millimetres corresponds to no more than 3.5 mm, and may be made of a protective coating material (topcoat / gelcoat). The corrugation of the surface coating **3** is formed at the *x* axis **4** by selecting its geometric parameters in relation to the parameters of the turbulent boundary layer that develops at the installation location, in such a way that the amplitude changes along with the thickness of the turbulent boundary layer **7** (5% * δ) with a height δ that is measured at the distance from the wall where the velocity U = 99%**U_e**, wherein **U_e** is the local velocity at the boundary of the turbulent boundary layer. The amplitude so selected slightly exceeds the inner region of the turbulent boundary layer **8**.

If the wave amplitude increases from the beginning to the end of the coating, the wavelength should increase proportionally and correspond to 15 x the corrugation amplitude. It should be noted that the relative flow direction, deviating, e.g., from the circumferential direction of the rotating turbine blade, is important for proper selection/determination of the corrugated coating wavelength. This results from the centrifugal force generated on the surface of the rotating wind turbine blade, which deflects the flow direction near the wall from the chord line of the profile by several tens of percent. Consequently, the effective corrugation wavelength is greater than the wavelength in the chord direction. For a constant amplitude-to-wavelength ratio of the corrugation, in a flow deflected by a constant centrifugal force (at a given radius), the decreasing mean velocity along the flow over the suction side of the blade, which causes a progressively greater deviation of the velocity vector from the blade chord direction, should be considered. Therefore, the wavelength of the corrugation increases, compensating for the increasing amplitude and ensuring a similar slope effectiveness (modulation strength) for each wave. In this example of a wind turbine blade, although the wavelength along the chord remains constant, the effective wavelength measured along the mean streamline may increase from 0.036c to 0.048c as a result of the centrifugal force.

## Example 3. COATING FORMED IN THE SKIN FOR CONTROLLING SEPARATION OF A TURBULENT BOUNDARY LAYER ON A HIGH-POWER WIND TURBINE BLADE

**Fig. 1** shows a general view of a preferred embodiment of the invention, applied at the profile of a wind turbine blade. The coating parameters have been determined according to the method described in **Example 1. Fig. 2b** shows the invention as a corrugated skin layer of a profile **2** mounted on the unmodified suction part of the blade **1,** downstream of point **5**. In this example, the skin layer with a corrugated wall **2** covers approximately 35% of the profile's chord **c** = 2.5 m on average, and does not exceed a thickness of 0.001c, which in millimetres corresponds to no more than 2.5 mm. Below are presented the thickness values of blade profile layers, measured from the outer side:

| Layer | Mid-span area (mm) | Blade tip (mm) | Notes |
|---|---|---|---|
| *Protective coating (topcoat / gelcoat)* | 0.3-0.6 | 0.2-0.4 | Protects against UV rays, erosion and moisture |
| *Outer skin (laminate)* | 8-20 | 3-8 | Glass or carbon fibre in epoxy resin; increased thickness in the mounting region |
| *Sandwich layer (core)* | 20-40 | 10-20 | PVC/PET foam or balsa; increases stiffness |

(continued)

| Layer | Mid-span area (mm) | Blade tip (mm) | Notes |
|---|---|---|---|
| *Inner skin* | 6-15 | 2-6 | Cooperates with the outer skin in a sandwich configuration |
| *Spar cap Shear webs* | 30-80 mm 10-25 mm | 10-30 mm 5-15 mm | The thickest load-bearing element, typically made of UD carbon fibre Carry shear forces |

The formation of such a coating does not require interference in the blade core **9,** but only up to 20% of the outer skin laminate.

The corrugation of the laminate coating **3** is formed by selecting the corrugation function parameters along the *x* axis **4** in relation to the parameters of the turbulent boundary layer that develops at the installation location, in such a way that the amplitude changes along with the thickness of the local boundary layer **7** ($3\% * \delta$) with a height $\delta$ that is measured at the distance from the wall where the velocity U = 99%$\mathbf{U\_e}$, wherein $\mathbf{U\_e}$ is the local velocity at the boundary of the turbulent boundary layer. The amplitude so selected does not exceed the inner region of the turbulent boundary layer **8**.

If the wave amplitude increases from the beginning to the end of the coating, the wavelength should increase proportionally and correspond to 15 x the corrugation amplitude. It should be noted that the relative flow direction, deviating, e.g., from the circumferential direction of the rotating turbine blade, is important for proper selection/determination of the corrugated layer wavelength. This results from the centrifugal force generated on the surface of the rotating wind turbine blade, which deflects the flow direction near the wall from the chord line of the profile by several tens of percent. Consequently, the effective corrugation wavelength is greater than the wavelength in the chord direction. For a constant amplitude-to-wavelength ratio of the corrugation, in a flow deflected by a constant centrifugal force (at a given radius), the decreasing mean velocity along the flow over the suction side of the blade, which causes a progressively greater deviation of the velocity vector from the blade chord direction, should be considered. Therefore, the wavelength of the corrugation increases, compensating for the increasing amplitude and ensuring that the wave edge efficiency is similar for each wave. In this example of a wind turbine blade, although the wavelength along the chord remains constant, the effective wavelength measured along the mean streamline may increase from 0.036c to 0.048c as a result of the centrifugal force.

## Example 4. SURFACE COATING FOR CONTROLLING SEPARATION OF A TURBULENT BOUNDARY LAYER ON A HIGH-SPEED TRAIN BODY

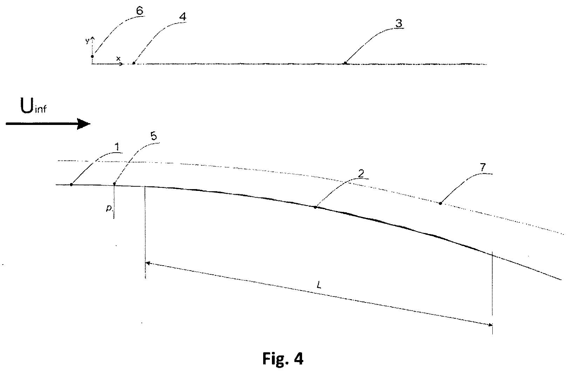

**Fig. 4** shows the invention as a corrugated surface coating of a profile **2** mounted on the tail section of a high-speed train.

The invention, as a corrugated surface coating of the train body **2,** is applied on the unmodified tail section of a high-speed train **1.** In this example, the surface coating with a corrugated wall **2** covers approximately 50% of the tail section, ***c*** = about 8 m on average, and does not exceed a thickness of 0.0036c. The corrugation of the surface coating **4** is formed at the *x* axis **3** by selecting its geometric parameters in relation to the parameters of the turbulent boundary layer that develops at the installation location, in such a way that the amplitude changes along with the thickness of the turbulent boundary layer **7** ($5\% * \delta$) with a height $\delta$ that is measured at the distance from the wall where the velocity U = 99%$\mathbf{U\_e}$, wherein $\mathbf{U\_e}$ is the local velocity at the boundary of the turbulent boundary layer. The amplitude so selected slightly exceeds the inner region of the turbulent boundary layer **8**.

If the wave amplitude increases from the beginning to the end of the coating, the wavelength should also increase proportionally and correspond to 15 x the corrugation amplitude along the mean streamline. In the example above, the wavelength may increase from 0.06c to 0.084c toward the trailing edge. For a more oval cross-section of the body, where the velocity vector may significantly deviate from the longitudinal direction, the wavelength should be corrected to account for that deviation.

A key aspect in designing the corrugated coating is to determine the local Reynolds number based on shear stresses, which should be higher than 2000. This is usually a location downstream of point p.

The starting point for mounting the corrugated coating should be determined on the basis of the said Reynolds number. This number increases along the surface being flowed over by the fluid, and the location where it reaches 2000 defines the position on the wind turbine blade profile or train body where installation of the coating may begin. An exemplary method for determining friction velocity, necessary to calculate the Re number, is described in publication [1], which is based on the diagnostic decomposition method [2][3] combined with method [4].

The end of the coating is determined at the point where the inner maximum of velocity fluctuations disappears. Normally, this occurs halfway between the point where the sign of static pressure gradient on the surface changes and the point of complete separation of the turbulent boundary layer on the surface being flowed over.

The above flow parameters should be determined for nominal mean inflow conditions. Since these conditions are

# EP 4 733 604 A1

variable, the corrugation determined under nominal conditions is the most effective.

The invention can be applied in many devices given the ubiquity of boundary layers with a high Reynolds number ($Re_\tau > 2000$). There are many applications where the efficiency of an already existing product can be improved by increasing the propagation velocity of small-scale turbulence. In particular, we can mention three applications within the field of aeronautics:

1. Delaying separation of the turbulent boundary layer on the blades of a high-power wind turbine (offshore turbines);
2. Delaying separation of the turbulent boundary layer on an aircraft wing;
3. Delaying separation of the turbulent boundary layer on the surface of an aircraft fuselage, high-speed train body, or ship hull.

The method presented in the following examples is not intended to limit the scope of the invention in any way. It is provided by way of example only and serves to describe the best mode of applying the invention known to the inventors at the time of filing this patent application.

**DESIGNATIONS:**

1. External surface of the profile/train;
2. Installed corrugated coating-formed or surface type;
3. Corrugated coating-formed or surface type;
4. Coordinate along the flow;
5. Point on the wing/train surface indicating the start of coating installation;
6. Coordinate transverse to the flow;
7. Turbulent boundary layer of thickness $\delta$;
8. Inner region of the turbulent boundary layer;
9. Surface of the profile structure.

Uinf - inflow velocity relative to the body immersed in a viscous fluid;
$\delta$ - local thickness of the boundary layer [5];
c - chord of the profile, length of the high-speed train tail section;
U - velocity;
U_e - velocity outside of the boundary layer;
Re_$\tau$ - local Reynolds number based on shear stress.

**REFERENCES:**

[1] Niegodajew P., Dróżdż A., Elsner W., Application of the diagnostic plot in estimation of the skin friction in turbulent boundary layer under an adverse pressure gradient. Arch Mech 2021; 73:201-215 Warsaw. https://doi.org/10.24423/aom.3746.

[2] Alfredsson P.H., Örlü R., Segalini A., A new formulation for the streamwise turbulence intensity distribution in wall-bounded turbulent flows. Eur J Mech B/Fluids 2012; 36:167-75. https://doi.org/10.1016/j.euromechflu.2012.03.015.

[3] Dróżdż A., Niegodajew P., Elsner W., Vinuesa R., Örlü R., Schlatter P., et al., A description of turbulence intensity profiles for boundary layers with adverse pressure gradient. Eur J Mech - B/Fluids 2020; 84:470-7. https://doi.org/10.1016/j.euromechflu.2020.07.003.

[4] Niegodajew P., Dróżdż A., Elsner W., A new approach for estimation of the skin friction in turbulent boundary layer under the adverse pressure gradient conditions. Int J Heat Fluid Flow 2019; 79:108456. https://doi.org/10.1016/j.ijheatfluidflow.2019.108456.

[5] Vinuesa R., Bobke A., Örlü R., Schlatter P., On determining characteristic length scales in pressure-gradient turbulent boundary layers. Phys Fluids 2016; 28:055101. http://dx.doi.org/10.1063/1. 4947532

[6] Dróżdż A., Niegodajew P., Romańczyk M., Elsner W., Convection velocity in turbulent boundary layers under adverse pressure gradient. Exp Therm Fluid Sci 2023; 145:110900. https://doi.org/10.1016/j.expthermflusci.2023.110900.

[7] Dróżdż A., Niegodajew P., Romańczyk M., Sokolenko V., Elsner W., Effective use of the streamwise waviness in the control of turbulent separation. Exp Therm Fluid Sci 2021;121:110291. https://doi.org/10.1016/j.expthermflusci.2020.110291.

**Claims**

1. A method for selecting parameters of a coating formed in a skin or applied, **characterised in that** it comprises the following steps:

   **a.** measuring the profile of mean velocity U in the region located halfway between the point of change in the sign of static pressure gradient on the surface and the point of complete flow separation;

   **b.** determining the local friction velocity $\mathbf{u\_\tau} = \sqrt{\tau_w/\rho}$ , where $\tau_w = \mu \dfrac{dU}{dn}$ , $\mu$ is the dynamic viscosity of the fluid, $\dfrac{dU}{dn}$ is the velocity gradient in the direction normal to the surface, and $\rho$ is the fluid density;

   **c.** determining the local boundary layer thickness $\delta$ based on the boundary layer measured in point **1a;**

   **d.** determining the local Reynolds number $\mathbf{Re\_\tau} = \delta^+ = \rho u_\tau \delta/\mu$ and confirming that $\mathbf{Re\_\tau}$ is higher than 2000, which is a condition necessary to use the coating;

   **e.** identifying the starting point for installation of the coating at the point where the sign of static pressure gradient on the surface changes;

   **f.** selecting the coating corrugation amplitude, which should rise above the surface by 4% to 6% or 3% to 4% of the thickness of turbulent boundary layer of the fluid, determined in point 1c for the applied coating or for the coating formed in the skin, respectively;

   **g.** selecting the corrugation wavelength, which, along the coating, maintains a constant ratio to amplitude, which ratio is 15, wherein the ratio is calculated along the mean streamline, and the factors to be taken into account should include, e.g., a deviation of the streamline from the corrugation direction;

   **h.** selecting the end point of the coating so that a full wavelength ends as close as possible to the location where the velocity profile was measured in point **1a;**

   **i.** evaluating the effectiveness of corrugation under nominal and varying flow conditions (e.g. by checking the aerodynamic characteristics of the surface being flowed over).

2. The method for selecting parameters according to claim 1, **characterised in that** the coating is permanently mounted to the substrate of the aerodynamic element.

3. A coating for turbulent flow control, whose parameters are determined according to the method described in claims 1-2, **characterised in that** the coating thickness ranges from 0.1 mm to 15 mm, it has on one side a technically smooth surface corrugated in at least one direction, and the maximum coating thickness does not exceed 6% of the local thickness of the turbulent boundary layer developing at the location where the coating is applied.

4. A corrugation formed in the skin or applied according to claim 3, **characterised in that** the connection between the profile surface and the corrugation has no significant steps.

5. The skin coating for turbulent flow control according to claims 3-4, **characterised in that** the wave is inclined, wherein the slope of the leading edge is up to 35% steeper than the one of the trailing edge.

6. The skin coating for turbulent flow control according to claims 3-5, **characterised in that** the first and last corrugation amplitudes are 3% and 4% of the measured in point **1c** boundary-layer thickness, , respectively.

7. The skin coating for turbulent flow control according to claims 3-6, **characterised in that** the strength of the coating is comparable to the outer layer of wind turbine blade profiles and the coating itself may be made of an elastic material and attached or formed in the blade skin coating by any method.

8. The surface coating for turbulent flow control according to claims 3-7, **characterised in that** it has an adhesive surface that allows permanent attachment (e.g. by adhesive bonding) to the surface being flowed over.

**Fig. 1**

**a**

**b**

**Fig. 2**

**Fig. 3**

**Fig. 4**

EUROPEAN SEARCH REPORT

Application Number

EP 25 46 0044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 833 389 A (SIROVICH LAWRENCE [US] ET AL) 10 November 1998 (1998-11-10) * figures 3-4 * ----- | 1-8 | INV. F15D1/12 |
| A | EP 0 244 335 A2 (UNITED TECHNOLOGIES CORP [US]) 4 November 1987 (1987-11-04) * column 5, line 6 - line 33 * ----- | 1-8 | |

TECHNICAL FIELDS
SEARCHED       (IPC)

F15D
F03D
B63B
B64C
B61D

The present search report has been drawn up for all claims

| Place of search | Date of completion of the search | Examiner |
|---|---|---|
| Munich | 13 March 2026 | Bindreiff, Romain |

## ANNEX TO THE EUROPEAN SEARCH REPORT
## ON EUROPEAN PATENT APPLICATION NO.

EP 25 46 0044

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2026

| Patent document cited in search report | | Publication date | Patent family member(s) | | Publication date |
|---|---|---|---|---|---|
| US 5833389 | A | 10-11-1998 | CA | 2224041 A1 | 09-06-1998 |
| | | | CN | 1186268 A | 01-07-1998 |
| | | | EP | 0850832 A1 | 01-07-1998 |
| | | | IL | 122505 A | 31-10-2000 |
| | | | JP | H10183557 A | 14-07-1998 |
| | | | KR | 19980063904 A | 07-10-1998 |
| | | | RU | 2191931 C2 | 27-10-2002 |
| | | | US | 5833389 A | 10-11-1998 |
| EP 0244335 | A2 | 04-11-1987 | CA | 1302841 C | 09-06-1992 |
| | | | EP | 0244335 A2 | 04-11-1987 |
| | | | JP | S62283203 A | 09-12-1987 |
| | | | NO | 172511 B | 19-04-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1283163 B1
- US 6345791 B1
- US 5833389 A


**Non-patent literature cited in the description**

- **NIEGODAJEW P.** ; **DRÓŻDŻ A.** ; **ELSNER W.** Application of the diagnostic plot in estimation of the skin friction in turbulent boundary layer under an adverse pressure gradient. *Arch Mech*, 2021, vol. 73, 201-215, https://doi.org/10.24423/aom.3746
- **ALFREDSSON P.H** ; **ÖRLÜ R.** ; **SEGALINI A.** A new formulation for the streamwise turbulence intensity distribution in wall-bounded turbulent flows. *Eur J Mech B/Fluids*, 2012, vol. 36, 167-75, https://doi.org/10.1016/j.euromechflu.2012.03.015
- **DRÓŻDŻ A.** ; **NIEGODAJEW P.** ; **ELSNER W.** ; **VINUESA R** ; **ÖRLÜ R.** ; **SCHLATTER P. et al.** A description of turbulence intensity profiles for boundary layers with adverse pressure gradient. *Eur J Mech - B/Fluids*, 2020, vol. 84, 470-7, https://doi.org/10.1016/j.euromechflu.2020.07.003
- **NIEGODAJEW P.** ; **DRÓŻDŻ A.** ; **ELSNER W**. A new approach for estimation of the skin friction in turbulent boundary layer under the adverse pressure gradient conditions. *Int J Heat Fluid Flow*, 2019, vol. 79, 108456, https://doi.org/10.1016/j.ijheatfluidflow.2019.108456
- **VINUESA R.** ; **BOBKE A.** ; **ÖRLÜ R.** ; **SCHLATTER P**. On determining characteristic length scales in pressure-gradient turbulent boundary layers. *Phys Fluids*, 2016, vol. 28, 055101, http://dx.doi.org/10.1063/1. 4947532
- **DRÓŻDŻ A.** ; **NIEGODAJEW P** ; **ROMAŃCZYK M** ; **ELSNER W.** Convection velocity in turbulent boundary layers under adverse pressure gradient.. *Exp Therm Fluid Sci*, 2023, vol. 145, 110900, https://doi.org/10.1016/j.expthermflusci.2023.110900
- **DRÓŻDŻ A.** ; **NIEGODAJEW P** ; **ROMAŃCZYK M.** ; **SOKOLENKO V.** ; **ELSNER W.** Effective use of the streamwise waviness in the control of turbulent separation. *Exp Therm Fluid Sci*, 2021, vol. 121, 110291, https://doi.org/10.1016/j.expthermflusci.2020.110291